# EUROPEAN PATENT APPLICATION

(11) **EP 1 919 091 A1**
(43) Date of publication of application: **07.05.2008**
(21) Application number: 05785542.1
(22) Date of filing: 21.09.2005
(51) Int. Cl.: H04B 1/59, G06K 17/00, H04B 5/02

(54) **TAG READING DEVICE**

(71) Applicant: MATSUSHITA ELECTRIC INDUSTRIAL CO., LTD., Osaka 571-8501 (JP)
(72) Inventor: KAGEYAMA, Takatoshi Matsushita Electric Industrial Co.,Ltd., 2-1-61, Shiromi, Chuo-ku, Osaka 540-6207 (JP)
(74) Representative: Grünecker, Kinkeldey, Stockmair & Schwanhäusser Anwaltssozietät
(86) International application number: PCT/JP2005/017371
(87) International publication number: WO 2007/034543

(57) **Abstract**

A tag reading device can effectively read a plurality of tags. The tag reading device includes a power control unit (109) for controlling an output power of a transmission unit (101) by a control signal so as to transmit transmission data with an output power set by an output power setting unit (108). When a plenty of tags exist in a readable area and identifiers of the gags frequently make collisions, firstly, the output power of the transmission unit (101) is reduced so as to narrow the readable area and suppress generation of collisions. When the number of tags existing in the readable area of a reader (100) and not yet read has become small, the output power of the transmission unit (101) during retransmission is increased and the readable area of the reader (100) is increased and the remaining tags are effectively read.

## Description

### Technical Field

The present invention relates to a tag reading apparatus used in an information reading system that reads unique information contained in tags attached to various products.

### Background Art

Conventionally, an RFID (Radio Frequency Identification) system that identifies or manages people and products using a micro wireless chip is known as this type of information reading system.

Studies on the RFID system have been underway as a merchandise identification or management technique as a substitute for barcodes in the distribution industry, and the RFID system is becoming a focus of attention as a fundamental technology in promoting IT implementation and automation in society.

In the RFID system, data is stored in a tag of several centimeters in size, and a reader, which is a tag reading apparatus, communicates with the tag by means of radio wave or electromagnetic wave.

There are various types of tag such as label type, card type, coin type and stick type, the communication distance thereof ranges from several millimeters to several meters, and different types of tag are chosen for use depending on the purpose of use.

In recent years, battery-less tags which can be used semipermanently also have come out using a technique of noncontact power transmission from an antenna side.

In general operations of reading tags in such an RFID system, a reader transmits transmission signals to tags in the neighborhood first. The tag which has received the transmission signal rectifies this signal and thereby obtains power and drives a circuit inside. When the circuit operates, the tag reads a command carried on the transmission signal and sends back information including an ID number in response to this command.

There are various schemes in the way tags respond in this case, and there are two methods as typical schemes; slotted ALOHA scheme and binary tree scheme.

The slotted ALOHA scheme shifts timing at which a tag responds, and the tag responds by shifting timing per certain time unit called "time slot."

According to the binary tree scheme, tags respond at the same timing (with no time shifting), and a reader specifies part of an ID number when the reader transmits a read command to read each tag (e.g., the first two bits are 10).

Only the corresponding tag responds to this, and, if a collision occurs here, the ID number is further specified with three bits or four bits, and the range is narrowed down until no more collision occurs.

Having read the ID number of the tag, the reader transmits a response stop command to the tag for which ID number could be read.

The tag which has received the response stop command from the reader does not respond for a given period.

The reader transmits the read command again and sequentially reads ID numbers of the remaining tags in the same way.

Furthermore, a technique disclosed in Patent Document 1, for example, is known as a system that efficiently performs these reading operations.

As shown in FIG.1, in the information identification system disclosed in Patent Document 1, control apparatus 1 collectively reads unique information stored in a plurality of n response apparatuses 2 (2-1, 2-2,... and 2-n) (where n is an undefined number) . Control apparatus 1 is connected to management apparatus 3 as required.

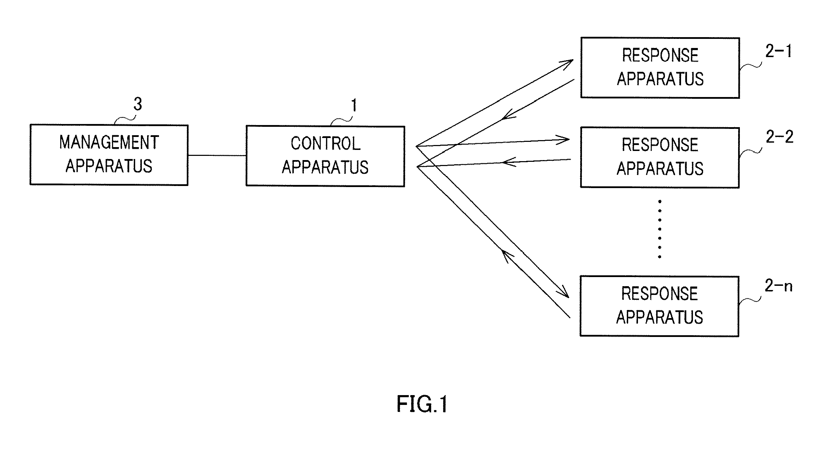

In FIG.1, control apparatus 1 transmits a predetermined response request signal to a downlink communication channel, gives response apparatus 2 a downlink signal designating various commands and reads unique information stored in response apparatus 2. Furthermore, control apparatus 1 issues a command to write information into a storage section in response apparatus 2 as required.

Response apparatus 2 stores unique information including at least unique identification information in the storage section inside, and, according to the command of the response request signal arriving from control apparatus 1 through a downlink communication channel to control apparatus 1, sequentially transmits bits forming predetermined response information showing unique information stored in response apparatus 2 through an uplink communication channel.

Control apparatus 1 decides statuses of the bits designated by the signals arriving through the uplink communication channel and sequentially transmits bits having the same statuses as statuses of these bits to the downlink communication channel.

Response apparatus 2 compares the latest bit that has arrived through the downlink communication channel with the latest bit transmitted by response apparatus 2, transmits, only when the two match, the next bit of the response information or stops, when the two do not match, transmitting response information until at least a new response request signal arrives.

Response apparatus 2 is attached, for example, to a product and used for identification or management of the product.

Management apparatus 3 is a so-called computer system for applications, receives information read by control apparatus 1 and processes or manages information of response apparatus 2 itself or the product or the like to which response apparatus 2 is attached (e.g., stock management of the product).
Patent Document 1: Japanese Patent Application Laid-Open No.HEI 10-268044

### Disclosure of Invention

### Problems to be Solved by the Invention

However, as described above, the RFID system that assigns unique ID numbers to tags attached to various products and manages information, is required to efficiently read a plurality of tags.

However, in the conventional RFID system, when a plurality of tags respond to queries from the reader at the same time, collisions occur, and tag ID numbers cannot be read.

Examples of a general method for solving this problem include a method of shifting transmission timing by a random time period to reduce aprobabilityof collision such as the above-described slotted ALOHA scheme and a method of specifying part of an ID number when the reader transmits a read command for reading a tag such as the above-described binary tree scheme.

However, the slotted ALOHA scheme shifts transmission timing, and so, when the number of tags is small while the number of time slots is large or vice versa, it takes time for the reader to read tags, which deteriorates the reading efficiency.

On the other hand, the binary tree scheme is effective when the number of tags is small, but, when the number of tags is large or when there are the same ID numbers, it is necessary to perform reading operations many times until the tags are identified, which deteriorates the reading efficiency.

Furthermore, the information identification system disclosed in Patent Document 1 decides bits of information stored in response apparatus 2 and bits of information received by control apparatus 1, and therefore it is necessary to perform retransmissions as many times as the number of bits of unique information until response apparatuses are narrowed down to one response apparatus 2 regardless of the number of response apparatuses 2, and, when the number of response apparatuses 2 is small, the reading efficiency deteriorates.

It is therefore an object of the present invention to provide a tag reading apparatus that can efficiently read a plurality of tags regardless of whether the number of tags to be read is large or small.

### Means for Solving the Problem

The tag reading apparatus according to the present invention reads a plurality of tags which are in a predetermined area and adopts a configuration including: a transmission section that transmits reading signals for reading the tags to the plurality of tags; a reception section that receives response signals from tags that have received the reading signals; and a control section that controls the transmission section such that, when an idle time period out of a reception period during which the reception section receives the response signals exceeds a predetermined time period, output power of the transmission section is increased and the transmission section retransmits the reading signals.

### Advantageous Effect of the Invention

According to the present invention, the output power of the transmission section is controlled depending on the reception status of the reception section that receives response signals from the tags, so that it is possible to reduce the occurrence of collision upon reading the plurality of tags and read many tags efficiently. Furthermore, by controlling the output power of the transmission section, it is possible to reduce power consumption of the apparatus by avoiding communications with maximum output power all the time. Furthermore, by controlling the output power of the transmission section, it is possible to reduce interference with other tag reading apparatuses in the neighborhood.

### Brief Description of Drawings

FIG.1 is a block diagram showing a schematic configuration of a conventional information identification system;
FIG.2 is a block diagram showing a schematic configuration of an information reading system using a tag reading apparatus according to an embodiment of the present invention;
FIG.3 is a schematic diagram showing how a reader reads tags as the tag reading apparatus according to the embodiment of the present invention;
FIG.4 is a flowchart showing operations of the information reading system using the tag reading apparatus according to the embodiment of the present invention;
FIG.5 is a time slot diagram showing an example of reading timings of the reader as the tag reading apparatus according to the embodiment of the present invention;
FIG.6 is a graph showing a relationship between the number of tags read by the reader as the tag reading apparatus and an average number of readings according to the embodiment of the present invention; and
FIG.7 is a graph showing a relationship between the number of tags read by the reader as the tag reading apparatus and an average idle time period according to the embodiment of the present invention.

### Best Mode for Carrying Out the Invention

An embodiment of the present invention will be described in detail with reference to the accompanying drawings. Components or corresponding parts in the drawings having the same configurations or functions will be assigned the same reference numerals, and the explanations will not be repeated.

Here, an RFID system will be explained as an example of the information reading system using the tag reading apparatus according to the embodiment of the present invention.

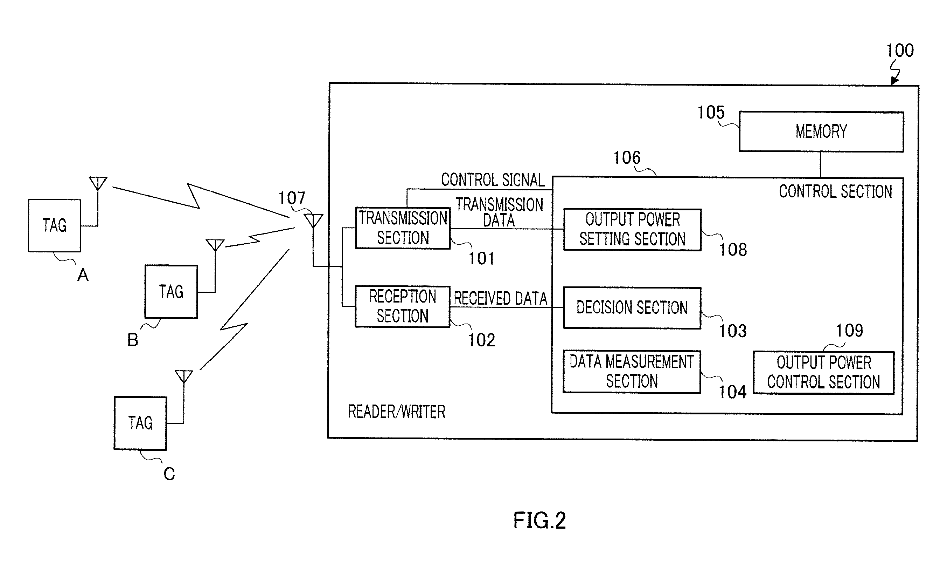

First, the schematic configuration of the RFID system using the tag reading apparatus in the example will be explained. In the RFID system shown in FIG.2, reader 100 which is the tag reading apparatus in the embodiment communicates with a plurality of tags A, B, C,... and reads data such as ID numbers of tags A, B, C, ... .

Reader 100 is provided with transmission section 101, reception section 102, decision section 103, data measurement section 104, memory 105, control section 106 and antenna 107.

In FIG.2, transmission section 101 modulates transmission data invoked by control section 106 from memory 105 as the storage section and transmits the modulated transmission data to tags A, B, C,... through antenna 107. The output power (transmission power) of transmission section 101 in this case is determined by a control signal given from control section 106.

Reception section 102 demodulates response signals from tags A, B, C,... received by antenna 107 and transmits the demodulated received data to decision section 103.

Decision section 103 decides per time unit (per time slot) whether reception section 102 has correctly received the response signals (received data) from the tags in a reception period or has received response signals showing that a collision has occurred or has received no response signal from the tags (no response time period) .

Decision section 103 then gives the decision result, "data received" when reception section 102 has received correct received data, "data NG (collision occurred)" when reception section 102 has received signals containing errors showing that a collision has occurred or "no data" when no response has been received from the tags, to data measurement section 104.

Based on the decision result of "data received," "data NG (collision occurred)" or "no data" given from decision section 103, data measurement section 104 measures the number of tags (number of read tags) read by reader 100 within the reception period and an idle time period during which reception section 102 has received no response signal from the tags.

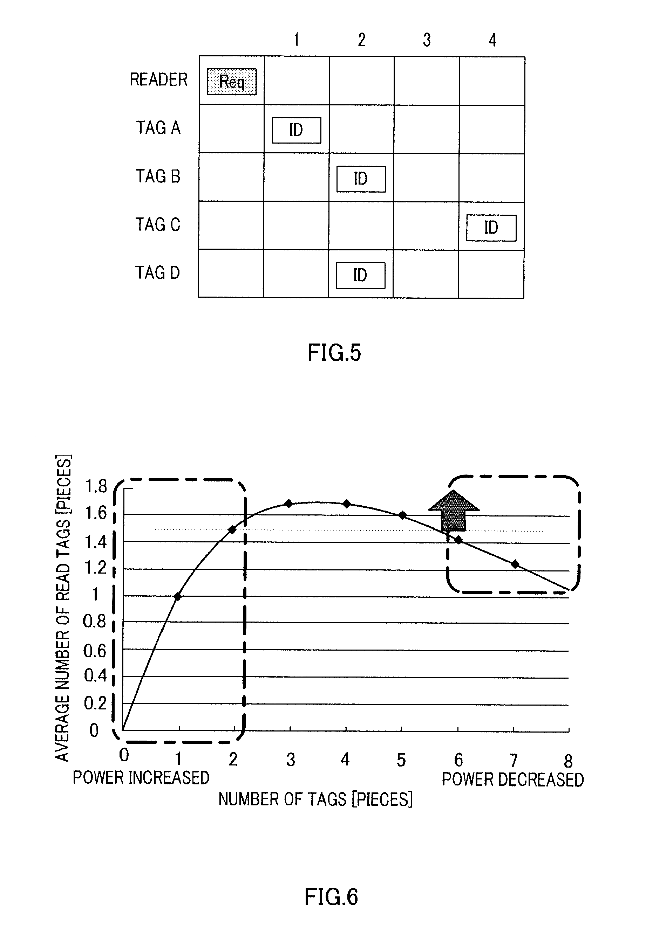

When, for example, the tags return response signals as shown in FIG.5 in response to the transmission signals (read commands) from reader 100 within the reception period, decision section 103 can read a response signal of tag A in time slot 1, and so decides "data received." Response signals of tag B and tag D collide with each other in time slot 2, and so decision section 103 decides "data NG (collision occurred)." There is no response from the tags in time slot 3, and so decision section 103 decides "no data." Similarly, decision section 103 makes decisions on each slot within the reception period, and data measurement section 104 measures the number of read tags and idle time period or the like based on the results.

Memory 105 stores commands to be transmitted to tags A, B, C,..., data read from tags A, B, C,..., and the number of read tags and measured values of idle time period and the like measured by data measurement section 104.

Control section 106 controls transmission and reception of data and control signals. Control section 106 of reader 100 of the embodiment is provided with output power setting section 108 and output power control section 109.

Output power setting section 108 compares the measurement result of data measurement section 104 with a predetermined threshold, decides whether to increase, keep or decrease the output power of transmission section 101 upon retransmission of transmission data and sets output power of transmission section 101.

Output power control section 109 controls the output power of transmission section 101 through a control signal so that the transmission data is transmitted with the output power set by output power setting section 108.

On the other hand, in the RFID system, when there are many tags in a readable area, if reader 100 attempts to read all tags at a time, IDs of tags collide with each other, which produces many collisions and results in read errors.

Then, reader 100 of the embodiment reduces the output power of transmission section 101, narrows the readable area of reader 100 (transmission area of transmission section 101), and thereby reduces the occurrence of collision.

When the number of unread tags that have not been successfully read in the readable area of reader 100 decreases, the output power of transmission section 101 upon retransmission is increased, the readable area of reader 100 is expanded, and the remaining tags are read efficiently.

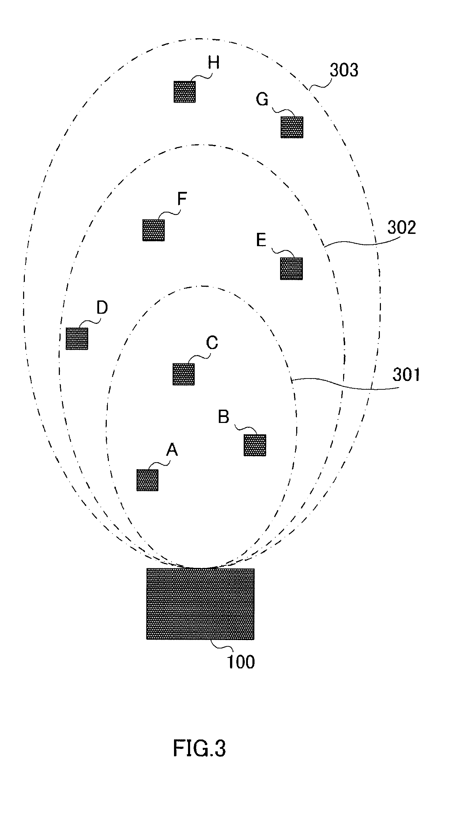

More specifically, as shown in FIG.3, for example, when reading eight tags, reader 100 reduces the output power of transmission section 101 first, sets the reading area of reader 100 to first reading area 301 and transmits the read commands so that only tags A, B and C in this first reading area 301 respond.

Reader 100 then transmits response stop commands to tags A, B and C, which have been successfully read, so as to stop further responses.

Next, reader 100 increases the output power of transmission section 101, expands the reading area of reader 100 to second reading area 302 and retransmits the read commands so that only tags D, F and E in this second reading area 302 respond.

Reader 100 transmits response stop commands to tags D, F and E, which have been successfully read through the retransmission of these read commands, so as to stop further responses.

Reader 100 then increases the output power of transmission section 101 again, expands the reading area of reader 100 to third reading area 303 and retransmits the read commands so that only remaining tags H and G in this third reading area 303 respond.

In this way, reader 100 of the embodiment is designed to read many tags efficiently while gradually expanding the reading area.

In the RFID system, it is not possible to accurately know approximately how many tags exist in the reading area of reader 100 beforehand.

Then, reader 100 of the embodiment is designed to estimate the number of unread tags in the reading area of reader 100 according to the number of tags read within a given time period and an idle time period during which there is no response from tags, and control the output power of transmission section 101 so that the number of read tags always increases.

Next, the tag reading operations by reader 100 of the embodiment will be explained with reference to FIG.2, FIG.3 and FIG.4.

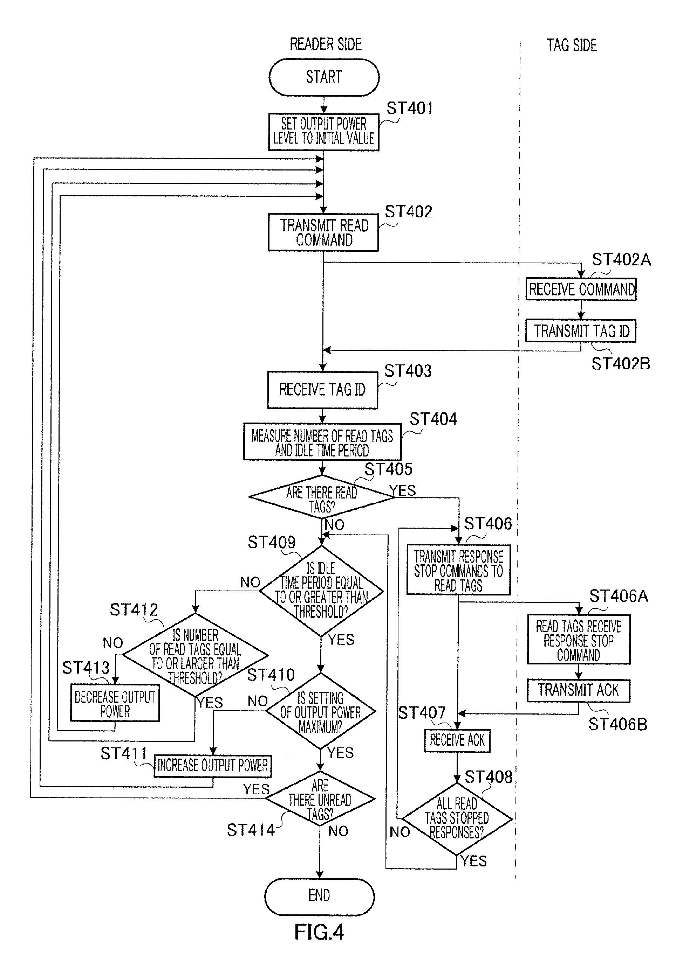

As shown in FIG.4, when tag reading operations by reader 100 start, the level of output power of transmission section 101 is first set to an initial value (step ST401).

Next, read commands are transmitted to tags A, B, C,... with output power of the initial value through transmission section 101 and antenna 107 of reader 100 (step ST402).

This causes only tags in the transmission area (e.g., first reading area 301 of reader 100 shown in FIG.3) of read commands transmitted with the output power of the initial value from transmission section 101, to receive the read commands (step ST402A).

The tags which have received the read commands transmit tag IDs based on a predetermined scheme (step ST402B) .

Next, reader 100 which has received IDs from the tags in step ST403 measures the number of read tags which have been successfully read during a response period from the tags and an idle time period (time period during which there is no response) during a response period from the tags at data measurement section 104 (step ST404).

Next, reader 100 decides in step ST405 whether or not there are tags which have been successfully read.

In step ST405, when deciding that there are tags which have been successfully read, reader 100 transmits response stop commands to the read tags which have been successfully read (step ST406).

This causes the read tags to receive the response stop commands transmitted from reader 100 (step ST406A), send back an ACK (acknowledgment signal) to reader 100 (step ST406B) and stop responses.

Next, reader 100 receives the ACK transmitted from the read tags (step ST407).

Next, reader 100 decides whether or not all the tags read in step ST403 have stopped responses by the response stop commands (step ST408), and, if there are read tags to which response stop commands have not been transmitted, the process returns to step ST406 to carry out transmission. When it is decided in step ST408 that all the tags read in step ST403 have stopped responses, the process moves to step ST409.

Next, when it is decided in step ST405 that there is no tag that has been read, the processing of step ST409 is immediately executed, and it is decided whether or not the measured idle time period is equal to or greater than a predetermined threshold.

When it is decided in step ST409 that the measured idle time period exceeds the predetermined threshold, it is decided whether or not the setting of output power of transmission section 101 set by output power setting section 108 is a maximum (step ST410).

When it is decided in step ST410 that the setting of output power of transmission section 101 is not a maximum, output power control section 109 increases the output power of transmission section 101 (step ST411), the process returns to step ST402 to retransmit the read commands.

Furthermore, when it is decided in step ST409 that the measured idle time period is less than the predetermined threshold, it is decided whether or not the number of read tags measured by data measurement section 104 is equal to or greater than a predetermined threshold (step ST412).

When it is decided in step ST412 that the number of read tags is smaller than the predetermined threshold, the output power of transmission section 101 is decreased (step ST413), the process returns to step ST402 to retransmit the read commands.

Furthermore, when it is decided in step ST412 that the number of read tags is equal to or larger than the predetermined threshold, the process directly returns to step ST402 to retransmit the read commands.

On the other hand, when it is decided in step ST410 that the setting of output power of transmission section 101 is a maximum, it is decided whether or not there are unread tags in the transmission area of the read commands of reader 100 (step ST414).

When it is decided in step ST414 that there are unread tags in the transmission area of the read commands of reader 100, the process returns to step ST402 to retransmit the read commands.

The operations of reading tags in the transmission area are repeated until it is decided in step ST414 that there is no unread tag in the transmission area of the read commands of reader 100, and after the readings of all tags are completed, the reading operations by reader 100 are finished.

In this way, reader 100 of the embodiment sets the output power of transmission section 101 upon initial transmission to predetermined output power which is not the maximum power, narrows the readable area of reception section 102 and reads the tags.

When tags in the area have been read to a certain extent, the output power of transmission section 101 is increased upon retransmission of read commands to expand the reading area of reception section 102.

Furthermore, the number of IDs of tags read for a given time period (per retransmission) and the idle time period during which no response is received from tags are measured, mean values thereof are calculated and the rate of occurrence of collision is evaluated from transitions thereof.

Here, when the output power of transmission section 101 is constant, and, when the mean value of the number of read tags is lower than a threshold and the idle time period is short, it is decided that many collisions have occurred.

Furthermore, when the output power of transmission section 101 is constant, and, when the mean value of read tags is lower than the threshold and the idle time period is long, it is decided that the number of unread tags is decreasing.

When it is decided from the above-described decision that the number of unread tags is decreasing, the output power of transmission section 101 upon retransmission of read commands, is increased.

Furthermore, when the number of collisions increases drastically (when the number of tags in the area increases), the output power of transmission section 101 upon retransmission of read commands, is decreased.

In this way, reader 100 in the RFID system of the embodiment is designed to read tags efficiently by performing output power control so that the number of read tags at control section 106 becomes a maximum.

On the other hand, in such an RFID system, when the number of time slots in which tags A, B, C and D respond to reader 100 is assumed to be four as shown in FIG.5, it is possible to read IDs of tag A in time slot 1 and tag C in time slot 4.

However, a collision occurs between tag B and tag D in time slot 2 in this example, and so the tags cannot be read. Furthermore, no tag responds in time slot 3. Therefore, the number of tags read by reader 100 is two, and the idle time period accounts for 25% in this case.

Furthermore, the average number of tags that can be read by reader 100 for one read command in this RFID system becomes a maximum when the number of tags is approximately four as shown in FIG.6 and tags are easily readable.

That is, as shown in FIG.6, in accordance with an increase in the number of tags, the number of data collisions increases and the tag reading rate by the reader decreases in this RFID system.

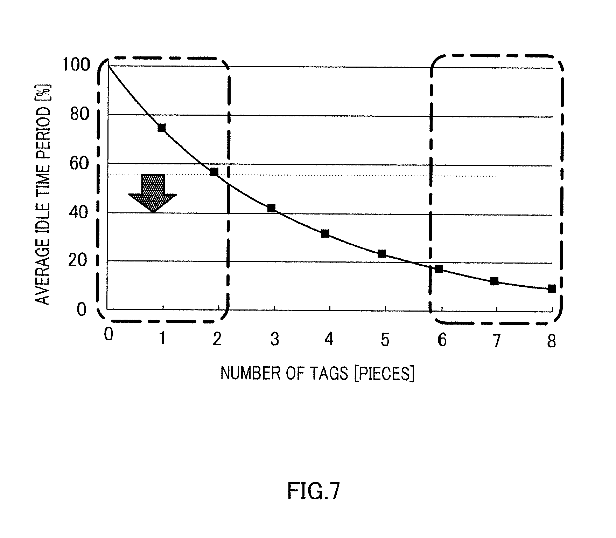

Furthermore, when the number of tags is one or two, data collisions hardly occur, but as shown in FIG.7, the idle time period during which there is no response from tags increases and the number of tags read by the reader decreases.

In this way, in such an RFID system, the tag reading efficiency deteriorates even when the number of tags is large or small, and so there are an optimum number of tags with respect to time slots that can be read by reader 100 at a time.

Then, decision section 103 in reader 100 of the embodiment detects places where collisions occur and time slots where there is no response in a certain time slot segment, data measurement section 104 measures the number of read tags and an idle time period, and output power control section 109 controls the output power of transmission section 101 so that reader 100 can always read an optimum number of tags without collisions.

More specifically, the number of tags which have responded through transmission of one read command (number of read tags) and the idle time period during which there has been no response are measured, and thereby the level of output power of transmission section 101 is changed based on a threshold.

Reader 100 then outputs a read command querying what the ID of the tag is. The tag which has received the read command responds to the command at random slot timing. Here, when a collision occurs, reader 100 cannot read the tag though it is not the case where there is no response.

In other words, reception section 102 undergoes three types of reception status; presence of errors (collision) in received data, no error (with response) and no response.

Then, reader 100 of the embodiment is designed such that output power control section 109 controls the output power of transmission section 101 in accordance with the reception status of reception section 102, so that reader 100 can efficiently read an optimum number of tags from time slots that can be read at a time.

Here, the number of time slots is four for ease of the calculation example, but the number of time slots is not limited to four.

Moreover, here, a case has been explained where tags respond to reader 100 based on the slotted ALOHA scheme, but even based on the binary tree scheme, by controlling the output power of transmission section 101 and causing tags to respond by narrowing the area in which tags can respond, it is also possible to provide the same advantage.

In a case where many tags gather in one area, if reader 100 attempts to read these tags, the number of responding tags may drastically increase when the output power of transmission section 101 is increased, and the number of responding tags may drastically decrease when the output power is decreased, and therefore, in such a case, output power control section 109 may also control the amount of increment and decrement of output power in smaller units.

Furthermore, in the above-described case, control may also be performed so as to decrease the occurrence of collision such that the number of time slots is increased without changing the amount of increment and decrement of output power.

Reader 100 of the embodiment controls output power based on a mean value for each retransmission, but control is not limited to this, and control may also be performed using other calculation methods such as calculating a mean value of a plurality of retransmissions with the same output power.

### Industrial Applicability

The tag reading apparatus according to the present invention can reduce power consumption by controlling the output power of the transmission section, and is therefore useful as a tag reading apparatus that reads unique information of tags attached to various products.

## Claims

1. A tag reading apparatus that reads a plurality of tags which are in a predetermined area, comprising:
a transmission section that transmits reading signals for reading the tags to the plurality of tags;
a reception section that receives response signals from tags that have received the reading signals; and
a control section that controls the transmission section such that, when an idle time period out of a reception period during which the reception section receives the response signals exceeds a predetermined time period, output power of the transmission section is increased and the transmission section retransmits the reading signals.

2. The tag reading apparatus according to claim 1, wherein, when a predetermined number of or more collisions occur in the response signals received by the reception section, the control section controls the transmission section such that output power of the transmission section is decreased and the transmission section retransmits the reading signals.

3. The tag reading apparatus according to claim 2, comprising a storage section for storing transmission commands and IDs of the plurality of tags to be transmitted to the plurality of tags.

4. The tag reading apparatus according to one of claims 1 to 3, wherein, when a predetermined number of or more collisions occur in the response signals received by the reception section within a reception period, the control section increases a number of time slots received by the reception section within the reception period such that the reception period is extended, by the reading signals retransmitted from the transmission section.

5. The tag reading apparatus according to one of claims 1 to 4, wherein the control section comprises:
a decision section that decides whether the reception section has correctly received the response signals, a collision has occurred in the response signals or no response signal has been received from the tags;
a data measurement section that measures a number of read tags where the reception section has successfully received the response signals within the reception period, and an idle time period during which the response signals have not been received, based on the decision result of the decision section;
an output power setting section that compares the measurement result of the data measurement section with a predetermined threshold and sets output power of the transmission section, when the transmission section retransmits the reading signals; and
an output power control section that controls the output power of the transmission section such that the reading signals are transmitted with the output power set by the output power setting section.

6. A tag reading method for reading a plurality of tags in a predetermined area, comprising:
a transmission step of transmitting reading signals for reading the tags to the plurality of tags;
a reception step of receiving response signals from tags that have received the reading signals;
a decision step of deciding whether the response signals have been successfully received in the reception step, a collision has occurred in the response signals or no response signal has been received from the tags;
a data measuring step of measuring a number of read tags where the response signals have been successfully received within a reception period in the reception step, and an idle time period during which the response signals have not been received, based on the decision result in the decision step;
an output power setting step of comparing the measurement result in the data measuring step with a predetermined threshold and setting output power in the transmission step when the reading signals are retransmitted in the transmission step; and
an output power control step of controlling output power in the transmission step such that the reading signals are transmitted with the output power set in the output power setting step.
